# EUROPÄISCHE PATENTANMELDUNG

(11) **EP 4 124 594 A1**
(43) Veröffentlichungstag der Anmeldung: **01.02.2023**
(21) Anmeldenummer: 22185500.0
(22) Anmeldetag: 18.07.2022
(51) Int. Cl.: B65G 47/71, B65G 47/82, B65G 29/00, B65G 47/84, B65G 47/51

(54) **VORRICHTUNG UND VERFAHREN ZUM PUFFERN VON OBJEKTEN**

(30) Priorität: 26.07.2021 DE 102021119261
(71) Anmelder: KRONES AG, 93073 Neutraubling (DE)
(72) Erfinder: WINZINGER, Frank, 93073 Neutraubling (DE)
(74) Vertreter: v. Bezold & Partner Patentanwälte - PartG mbB

(57) **Zusammenfassung**

Die Erfindung betrifft u.a. eine Vorrichtung (12A-12E) zum Puffern von Objekten. Die Vorrichtung (12A-12E) weist einen Einlaufförderer (18) mit einem Einlaufübergabeabschnitt (26), einen Auslaufförderer (20) mit einem Auslaufübergabeabschnitt (28), eine Pufferfläche (22), die sich bogenförmig zwischen dem Einlaufübergabeabschnitt (26) und dem Auslaufübergabeabschnitt (28) erstreckt, und mehrere Transferelemente (24) auf. Die Transferelemente (24) sind unabhängig voneinander zum Schwenken um eine vertikale Drehachse (A) zum Bewegen mehrerer der Objekte von dem Einlaufübergabeabschnitt (26) zu der Pufferfläche (22) und/oder von der Pufferfläche (22) zu dem Auslaufübergabeabschnitt (28) antreibbar. Vorteilhaft kann die Vorrichtung (12A-12E) besonders flexibel einsetzbar und konstruktiv einfach aufgebaut sein.

## Beschreibung

### Technisches Gebiet

Die Erfindung betrifft eine Vorrichtung zum Puffern von Objekten, vorzugsweise Behältern in einer Behälterbehandlungsanlage. Die Erfindung betrifft ebenfalls ein Verfahren zum Puffern von Objekten, vorzugsweise mittels einer solchen Vorrichtung.

### Technischer Hintergrund

In einer Anlage, z. B. Behälterbehandlungsanlage, können Objekte nacheinander zu verschiedenen Maschinen bzw. Behandlungseinrichtungen mittels mehrerer Förderer bewegt werden. Zwischen den Maschinen können Objektpuffer angeordnet sein, in denen die Objekte zwischengelagert werden können, wenn dies bspw. aufgrund der Betriebsweise der Anlage oder einer Fehlfunktion in einer stromabwärtsseitigen Maschine bzw. Behandlungseinrichtung temporär erforderlich ist. Objektpuffer können in unterschiedlichsten Konstruktionen ausgeführt sein.

Die EP 2 920 093 B1 bezieht sich auf eine Vorrichtung zum Sammeln und Übertragen von Gegenständen, umfassend einen Zuführförderer, einen Abführförderer, eine Sammelfläche, ein erstes Transfermittel zum Bewegen mindestens einer Reihe von Gegenständen von dem Zuführförderer zu der Sammelfläche und ein zweites Transfermittel zum Bewegen mindestens einer Reihe von Gegenständen von der Sammelfläche zu dem Abführförderer. Mindestens eines der ersten und zweiten Transfermittel umfasst eine robotergestützte Handhabungsvorrichtung, die mit einem Handhabungskopf für mindestens eine Reihe von Gegenständen versehen ist. Die Sammelfläche ist ein Förderer, der das zweite Transfermittel bildet und dessen Richtung senkrecht zur Förderrichtung des Eingangsförderers ist.

Der Erfindung liegt die Aufgabe zu Grunde, eine verbesserte Vorrichtung zum Puffern zu schaffen. Vorzugsweise soll die Vorrichtung besonders flexibel einsetzbar sein und/oder konstruktiv einfach aufgebaut sein.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft eine Vorrichtung zum Puffern von Objekten, vorzugsweise Behältern in einer Behälterbehandlungsanlage. Die Vorrichtung weist einen Einlaufförderer mit einem, vorzugsweise einspurigen, Einlaufübergabeabschnitt auf. Die Vorrichtung weist einen Auslaufförderer mit einem, vorzugsweise mehrspurigen, Auslaufübergabeabschnitt auf. Die Vorrichtung weist eine Pufferfläche, die sich bogenförmig (z. B. kreisbogenförmig) zwischen dem Einlaufübergabeabschnitt und dem Auslaufübergabeabschnitt erstreckt, auf. Die Vorrichtung weist mehrere Transferelemente, die unabhängig voneinander zum Schwenken um eine vertikale Drehachse zum Bewegen mehrerer der Objekte von dem Einlaufübergabeabschnitt zu der Pufferfläche und/oder von der Pufferfläche zu dem Auslaufübergabeabschnitt antreibbar sind, auf.

Bei den mehreren Transferelementen handelt es sich um zwei oder mehr Transferelemente.

Vorteilhaft kann eine Lagerung und eine Antriebstechnik der Transferelemente vergleichsweise einfach gestaltet werden, da diese sich nicht entlang der gesamten Pufferfläche erstrecken muss, sondern lediglich im Bereich der Drehachse angeordnet werden können.

Eine Bogenlänge der Pufferfläche kann zudem flexibel gewählt werden, sodass die Vorrichtung zum Puffern in unterschiedlichsten Anlagenlayouts integriert werden kann.

Es ist auch möglich, dass die Vorrichtung zur Verteilung von Objekten zu unterschiedlichen Maschinen, zu denen an unterschiedlichen Winkelpositionen der Pufferfläche abgezweigt wird, einsetzbar ist.

Gleichermaßen kann die Vorrichtung zum Empfang von Objekten von unterschiedlichen Maschinen, von denen Objekte jeweils an unterschiedlichen Winkelpositionen der Pufferfläche empfangen werden, einsetzbar sein.

Bspw. kann die Pufferfläche sich um einen spitzen, rechten, stumpfen, gestreckten oder überstumpfer Winkel in einem Bereich größer als 0° und/oder kleiner gleich 360° bezüglich der Drehachse erstrecken. Bevorzugt liegt der Winkelbereich zwischen 30° und 330°.

In einem Ausführungsbeispiel weist die Vorrichtung mindestens eine vertikale Drehsäule auf, die die vertikale Drehachse aufweist und an der die mehreren Transferelemente schwenkbar gelagert (und z. B. getragen) sind. Vertikal ist so definiert, dass eine Verlängerung der Vertikalen den Erdmittelpunkt schneidet.

Vorzugsweise können mehrere koaxial angeordnete Drehsäulen für die mehreren Transferelemente umfasst sein, besonders bevorzugt mit je einer Drehsäule je Transferelement. Damit kann die schwenkbare Lagerung der Drehelemente konstruktiv einfach und bauraumsparend ausgeführt sein.

Zwei oder mehr Drehsäulen können zumindest über einen Höhenbereich einen voneinander unterschiedlichen Außen- und Innendurchmesser aufweisen.

Zwei oder mehr Drehsäulen können zumindest bereichsweise auf derselben Höhe (Abstand zum Erdmittelpunkt) angeordnet sein.

Zwei oder mehr Drehsäulen können zumindest bereichsweise ineinander verschachtelt angeordnet sein.

Es ist möglich, dass die mehreren Transferelemente zumindest teilweise und/oder zumindest zeitweise auf unterschiedlichen Höhen der mindestens einen Drehsäule schwenkbar gelagert sind.

In einem weiteren Ausführungsbeispiel sind die mehreren Transferelemente jeweils zu dem Einlaufübergabeabschnitt, der Pufferfläche und dem Auslaufübergabeabschnitt um die vertikale Drehachse schwenkbar. Alternativ ist mindestens eines der mehreren Transferelemente zum Bewegen der Objekte, vorzugsweise nur, von dem Einlaufübergabeabschnitt zu der Pufferfläche um die vertikale Drehachse und zurück schwenkbar und/oder mindestens ein anderes der mehreren Transferelemente ist zum Bewegen der Objekte, vorzugsweise nur, von der Pufferfläche zu dem Auslaufübergabeabschnitt um die vertikale Drehachse und zurück schwenkbar.

In einem weiteren Ausführungsbeispiel sind die mehreren Transferelemente vollständig umlaufend um die vertikale Drehachse schwenkbar. Alternativ oder zusätzlich sind die mehreren Transferelemente, vorzugsweise nur, alternierend um die vertikale Drehachse hin- und her schwenkbar.

In einem weiteren Ausführungsbeispiel ist die Vorrichtung (z. B. mittels einer Steuereinheit) dazu konfiguriert, in einem Einpuffermodus mittels der mehreren Transferelemente wiederholt Objekte von dem Einlaufübergabeabschnitt zu der Pufferfläche zu bewegen und währenddessen keine Objekte von der Pufferfläche zu dem Auslaufübergabeabschnitt zu bewegen.

In einem weiteren Ausführungsbeispiel ist die Vorrichtung (z. B. mittels einer Steuereinheit) dazu konfiguriert, in einem Auspuffermodus mittels der mehreren Transferelemente fortwährend mehr Objekte von der Pufferfläche zu dem Auslaufübergabeabschnitt zu bewegen als von dem Einlaufübergabeabschnitt zu der Pufferfläche.

In einem weiteren Ausführungsbeispiel ist die Vorrichtung (z. B. mittels einer Steuereinheit) dazu konfiguriert, in einem Durchlaufmodus mittels der mehreren Transferelemente die Objekte durchgehend von dem Einlaufübergabeabschnitt über die Pufferfläche zu dem Auslaufübergabeabschnitt zu bewegen. Dabei kann auf die Pufferfunktion der Vorrichtung verzichtet werden.

Vorzugsweise kann sich der Begriff "Steuereinheit" auf eine Elektronik (z. B. mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

In einem weiteren Ausführungsbeispiel sind die mehreren Transferelemente vertikal bewegbar (z. B. mittels einer Antriebseinheit), vorzugsweise unabhängig voneinander und/oder unabhängig von einer Schwenkposition des jeweiligen Transferelements bezüglich der Drehachse. In einem weiteren Ausführungsbeispiel sind die mehreren Transferelemente auf unterschiedlichen Höhen beim Schwenken um die Drehachse aneinander vorbeibewegbar (z. B. in der gleichen Richtung und/oder in entgegengesetzte Richtungen).

In einem weiteren Ausführungsbeispiel ist die Pufferfläche zum Anpassen einer Bogenlänge der Pufferfläche modular aufgebaut. Vorzugsweise kann die Pufferfläche derart modular aufgebaut sein, dass durch Anpassen einer Bogenlänge eines Ringsegmentabschnitts der Pufferfläche und/oder durch Anpassen einer Anzahl von benachbarten Ringsegmentabschnitten der Pufferfläche die Bogenlänge der Pufferfläche anpassbar ist. Vorteilhaft kann damit die Vorrichtung direkt vor Ort an die jeweiligen Anlagengegebenheiten exakt angepasst werden. Es ist auch möglich, dass die Vorrichtung damit besonders flexibel an unterschiedlichste Anlagenlayouts anpassbar ist und auch nach dem Aufstellen an Veränderungen im Anlagenlayout angepasst werden kann.

In einem weiteren Ausführungsbeispiel sind die mehreren Transferelemente dazu ausgebildet, die jeweils mehreren Objekte in mindestens einer Reihe derart zu bewegen, dass die mehreren Objekte in der mindestens einen Reihe beim Bewegen von hinten (bzgl. der Bewegungsrichtung) geschoben sind und von vorne (bzgl. der Bewegungsrichtung) zum Verhindern eines Umfallens gestützt sind (vorzugsweise zumindest beim Beschleunigen und/oder Verzögern der mehreren Objekte in der mindestens einen Reihe).

Die Transferelemente können Mitnehmer aufweisen, die die Objekte kontaktieren. Die Mitnehmer können als Schieber ausgebildet sein.

In einem weiteren Ausführungsbeispiel ist das Schieben von hinten und das Stützen von vorne bewirkt durch eine gassenförmige oder greiferförmige Ausbildung von den Mitnehmern der mehreren Transferelemente, oder durch Positionieren (z. B. Einklemmen) der mehreren Objekte in der mindestens einen Reihe zwischen zwei benachbarten Transferelementen beim Bewegen.

In einem weiteren Ausführungsbeispiel ist mindestens ein Mitnehmer, welcher insbesondere zum Auspuffern von Objekten dient, um eine weitere, insbesondere vertikale, Achse drehbar angeordnet. Diese Achse weist einen Abstand zu der Achse der Drehsäule auf, an der das den Mitnehmer aufweisende Transferelement angeordnet ist.

Durch diese zusätzliche Drehbarkeit des Mitnehmers kann insbesondere bei einem mehrspurigen Auslauf erreicht werden, dass abzutransportierende Reihen von Gütern, deren Verlängerung der Abförderstrecke nicht die Achse der Drehsäule schneidet, parallel zu anderen Reihen auf dem Auslaufförderer positioniert werden können.

Die zusätzliche Drehung eines Mitnehmers kann durch einen am Transferelement angeordneten Antrieb, z.B. einen Elektromotor, realisiert sein.

In einem weiteren Ausführungsbeispiel weisen die mehreren Transferelemente jeweils mehrere, nebeneinander angeordnete Objektgassen zum gleichzeitigen Bewegen mehrerer Reihen von Objekten auf. Vorteilhaft kann damit eine Leistung der Vorrichtung gesteigert werden.

In einem weiteren Ausführungsbeispiel ist eine jeweilige Breite der mehreren Objektgassen verstellbar, vorzugsweise motorisch, oder die mehreren Objektgassen weisen eine feststehende Breite auf. Vorteilhaft kann eine verstellbare Breite bspw. eine Anpassung an unterschiedliche Objektformate ermöglichen.

Die Breitenverstellung kann in einer weiteren Ausführungsform zum Greifen (Einspannen von zwei Seiten) der Objekte während des Transports genutzt werden.

Es ist auch möglich, dass je Transferelement nur eine Objektgasse umfasst ist, die bspw. eine verstellbare oder feststehende Breite aufweist.

In einem weiteren Ausführungsbeispiel verlaufen die mehreren Objektgassen je Transferelement im Wesentlichen parallel, oder die mehreren Objektgassen je Transferelement verlaufen angeschrägt zueinander, vorzugsweise mit jeweiligen Längsachsen, die sich in der Drehachse treffen. Vorteilhaft kann das Schrägverlaufen bspw. ermöglichen, dass auf einen Schlitten zum Bewegen der Objektgassen verzichtet werden kann.

In einem weiteren Ausführungsbeispiel sind die mehreren Objektgassen an einem jeweiligen Transferelement im Wesentlichen tangential zu einer Kreisbahn um die Drehachse bewegbar, vorzugsweise mittels eines motorisch angetriebenen Schlittens des jeweiligen Transferelements.

In einem weiteren Ausführungsbeispiel sind die mehreren Transferelemente und/oder Mitnehmer der mehreren Transferelemente ein- und ausfahrbar, vorzugsweise in radialer Richtung von der Drehsäule. Vorteilhaft kann damit eine sanfte Übernahme und/oder Übergabe der Objekte ermöglicht werden.

In einem weiteren Ausführungsbeispiel weist die Vorrichtung ferner einen weiteren Einlaufförderer mit einem weiteren, vorzugsweise einspurigen, Einlaufübergabeabschnitt auf, wobei sich die Pufferfläche bogenförmig (z. B. kreisbogenförmig) zu dem weiteren Einlaufübergabeabschnitt erstreckt, und optional mindestens eines der mehreren Transferelemente zum Bewegen von Objekten von dem weiteren Einlaufübergabeabschnitt zu der Pufferfläche um die vertikale Drehachse schwenkbar ist. Vorteilhaft kann damit ein Puffern von Objekten aus mehreren Quellen ermöglicht werden, z. B. gleichzeitig oder nacheinander.

In einem weiteren Ausführungsbeispiel weist die Vorrichtung ferner einen weiteren Auslaufförderer mit einem weiteren, vorzugsweise mehrspurigen, Auslaufübergabeabschnitt auf, wobei sich die Pufferfläche bogenförmig (z. B. kreisbogenförmig) zu dem weiteren Auslaufübergabeabschnitt erstreckt, und optional mindestens eines der mehreren Transferelemente zum Bewegen von Objekten von der Pufferfläche zu dem weiteren Auslaufübergabeabschnitt um die vertikale Drehachse schwenkbar ist.

Es ist möglich, dass die Pufferfläche durchgehend ausgeführt ist. Alternativ kann die Pufferfläche mehrere bogenförmige Pufferflächenabschnitte aufweisen, die sich jeweils zwischen zwei der Förderer erstrecken.

Die Pufferfläche kann modular ausgebildet sein, so dass z.B. eine flexible Erweiterung einer Pufferfläche bei bestehenden Anlagen möglich ist. So kann eine Pufferfläche z.B. zwei im Wesentlichen gleich aufgebauten Module aufweisen. Zwei oder mehr Module können beispielsweise dieselbe Winkelerstreckung aufweisen, z.B. zwei Module ä 30°. Weiterhin kann die Vorrichtung auch zwei unterschiedliche Modularten aufweisen, z.B. ein Modul ä 60° und ein Modul ä 90°. Vorzugsweise weisen alle Module eine Winkelerstreckung mit einem Vielfachen von 5° auf. Einzelne Module können benachbart unmittelbar aneinander angrenzend angeordnet sein oder, wie schon bei den Pufferflächenabschnitten erwähnt, einen Abstand zueinander aufweisen.

Alle Module können eine einheitliche Schnittstelle aufweisen, insbesondere zum Verbinden der Module miteinander. Dies kann beispielsweise durch mindestens eine Steckverbindung erreicht werden, mittels welche die Module auch gleich zueinander ausgerichtet (bzw. zentriert) werden können. Bei der Steckverbindung kann es sich z.B. um ein oder zwei Zapfen des einen Moduls handeln, welche in ein oder zwei Löcher des anderen Moduls gesteckt werden. Zapfen und Löcher können konusförmig ausgebildet sein.

Eine derartige Schnittstelle kann auch bei möglichen Verbindungen der Module zu Zu- und Abförderern vorgesehen sein.

Bei der Pufferfläche kann es sich um einen oder mehrere angetriebene Kurvenförderer handeln. Es kann sein, dass im Fall von mehreren Kurvenförderern jeder seinen eigenen Antrieb aufweist. Alternativ kann ein Antrieb für mehrere Förderer vorgesehen sein. Insbesondere können Module ohne eigenen Antrieb eine Getriebekopplung zum Anschluss an einen Antrieb eines anderen Moduls aufweisen.

Die Pufferfläche kann weiterhin Gassenwände aufweisen, welche zu transportierende "Reihen" an Objekten auf der Pufferfläche voneinander trennen. Diese können radial verstellbar sein.

Ein weiterer Aspekt der vorliegenden Offenbarung betrifft ein Verfahren zum Puffern von Objekten (z. B. Behältern), vorzugsweise mittels einer Vorrichtung zum Puffern wie hierin offenbart. Das Verfahren weist ein Einpuffern von Objekten von einem, vorzugsweise einspurigen, Einlaufübergabeabschnitt eines Einlaufförderers zu einer sich bogenförmig (z. B. kreisbogenförmig) erstreckenden Pufferfläche mittels mindestens eines von mehreren, unabhängig antreibbaren Transferelementen, das jeweils mehrere der Objekte, vorzugsweise in mindestens einer Reihe, von dem Einlaufübergabeabschnitt zu der Pufferfläche durch Schwenken um eine vertikale Drehachse bewegt, auf. Alternativ oder zusätzlich weist das Verfahren ein Auspuffern von Objekten von einer sich bogenförmig (z. B. vorzugsweise kreisbogenförmig) erstreckenden Pufferfläche zu einem, vorzugsweise mehrspurigen, Auslaufübergabeabschnitt eines Auslaufförderers mittels mindestens eines von mehreren, unabhängig antreibbaren Transferelementen, das jeweils mehrere der Objekte, vorzugsweise in mindestens einer Reihe, von der Pufferfläche zu dem Auslaufübergabeabschnitt durch Schwenken um eine vertikale Drehachse bewegt, auf. Vorteilhaft können mit dem Verfahren die gleichen Vorteile erzielt werden, die bereits unter Bezug auf die Vorrichtung beschrieben wurden.

Ein Verfahrensschritt kann in einer Ausführungsform dadurch realisiert werden, indem ein Transferelement in Umfangsrichtung ein anderes Transferelement überholt bzw. an diesem vorbeifährt. Vorzugsweise befinden sich die Transferelemente zum Zeitpunkt des Überholens auf unterschiedlichen Höhen.

Ein weiterer Aspekt der vorliegenden Offenbarung betrifft eine Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel), die eine Vorrichtung zum Puffern wie hierin offenbart aufweist.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Draufsicht auf eine Vorrichtung zum Puffern von Objekten gemäß einem Ausführungsbeispiel der vorliegenden Offenbarung;
- Figur 2: eine schematische Seitenansicht einer Vorrichtung zum Puffern von Objekten gemäß einem Ausführungsbeispiel der vorliegenden Offenbarung;
- Figur 3: eine schematische Seitenansicht einer Vorrichtung zum Puffer von Objekten gemäß einem Ausführungsbeispiel der vorliegenden Offenbarung;
- Figur 4: eine schematische Draufsicht auf eine Vorrichtung zum Puffer von Objekten gemäß einem Ausführungsbeispiel der vorliegenden Offenbarung;
- Figur 5: eine schematische Draufsicht auf eine Vorrichtung zum Puffer von Objekten gemäß einem Ausführungsbeispiel der vorliegenden Offenbarung;
- Figur 6: eine schematische Draufsicht auf eine Vorrichtung zum Puffer von Objekten gemäß einem Ausführungsbeispiel der vorliegenden Offenbarung;
- Figur 7: eine schematische Draufsicht auf die beispielhafte Vorrichtung zum Puffer von Objekten von Figur 6;
- Figur 8: eine schematische Draufsicht auf ein Transferelement einer Vorrichtung zum Puffer von Objekten gemäß einem Ausführungsbeispiel der vorliegenden Offenbarung;
- Figur 9: eine schematische Draufsicht auf ein Transferelement einer Vorrichtung zum Puffer von Objekten gemäß einem Ausführungsbeispiel der vorliegenden Offenbarung; und
- Figur 10: eine schematische Draufsicht auf ein Transferelement einer Vorrichtung zum Puffer von Objekten gemäß einem Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

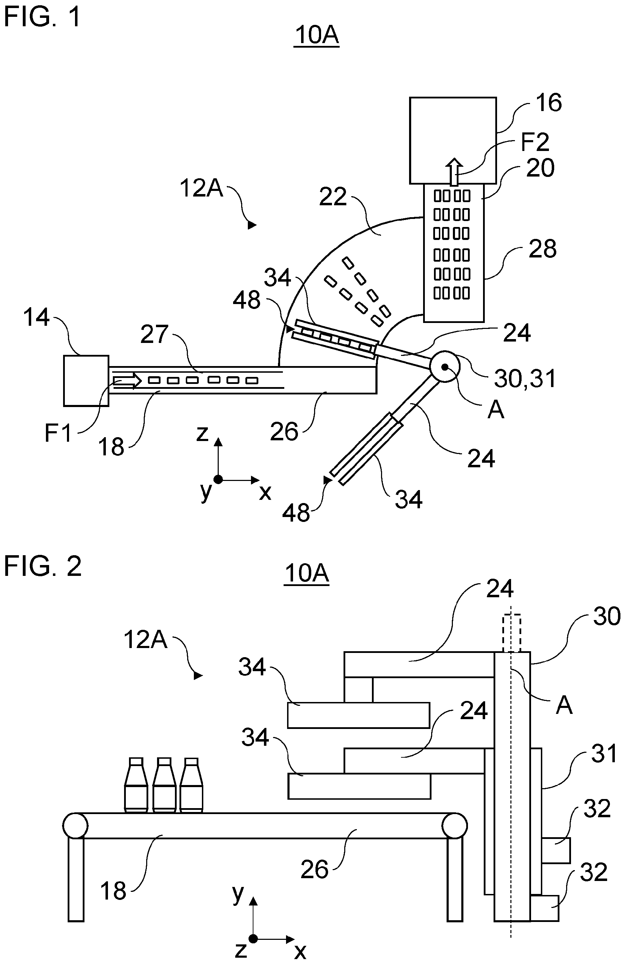

Die Figuren 1 bis 7 zeigen Anlagen 10A - 10E bzw. einen jeweiligen Anlagenausschnitt. Die Anlagen 10A - 10E sind bevorzugt als Behälterbehandlungsanlagen ausgeführt. In den Behälterbehandlungsanlagen können Behälter vorzugsweise für flüssige Medien, z. B. Getränke oder flüssige Nahrungsmittel, behandelt werden. Hierbei können die Behälter beispielsweise hergestellt, gereinigt, geprüft, abgefüllt, verschlossen, etikettiert, bedruckt, verpackt und/oder palettiert werden. Die Behälter können bspw. als Flaschen, Dosen, Kanister, Kartons, Flakons usw. ausgeführt sein.

Die Anlagen 10A bis 10E bzw. deren Vorrichtungen 12A bis 12E zum Puffern weisen ähnliche Konfigurationen auf. Die nachfolgende Beschreibung der Anlage 10A bzw. der Vorrichtung 12A zum Puffern gilt somit ebenso für die Anlagen 10B - 10E bzw. die Vorrichtungen 12B bis 12E zum Puffern. Auf wesentliche Unterschiede wird hingewiesen.

Die Figuren 1 und 2 zeigen die Anlage 10A in einer Draufsicht und einen Ausschnitt davon in einer Seitenansicht.

Die Anlage 10A weist eine Vorrichtung 12A zum Puffern von Objekten, vorzugsweise Behältern (z. B. einzeln oder in Form von Gebinden) auf. Aus Übersichtsgründen sind die Objekte in den Figuren nicht mit einem Bezugszeichen versehen. Stattdessen sind die Objekte in den Figuren 1 bis 10 als Rechtecke dargestellt.

Die Objekte weisen vorzugsweise einen im Wesentlichen nicht runden Querschnitt auf, können also beispielhaft im Wesentlichen einen ovalen oder vieleckigen Querschnitt aufweisen.

Die Anlage 10A kann neben der Vorrichtung 12A optional noch mindestens eine erste Maschine 14 und/oder mindestens eine zweite Maschine 16 aufweisen.

Die mindestens eine erste Maschine 14 kann bzgl. eines Objektstroms durch die Anlage 10A stromaufwärts von der Vorrichtung 12A angeordnet sein. Die mindestens eine erste Maschine 14 kann bspw. eine Behälterfülleinrichtung zum Befüllen von Behältern und/oder eine Behälterverschließeinrichtung zum Verschließen von Behältern und/oder eine Etikettiereinrichtung zum Etikettieren von Objekten, vorzugsweise Behältern, und/oder eine Verpackungseinrichtung zum Verpacken von Objekten, vorzugsweise Behältern, aufweisen.

Die mindestens eine zweite Maschine 16 kann bzgl. eines Objektstroms durch die Anlage 10A stromabwärts von der Vorrichtung 12A angeordnet sein. Die mindestens eine zweite Maschine 16 kann bspw. eine Etikettiereinrichtung zum Etikettieren von Objekten, vorzugsweise Behältern, und/oder eine Verpackungseinrichtung zum Verpacken von Objekten, vorzugsweise Behältern, und/oder eine Palettiervorrichtung zum Palettieren von Objekten, vorzugsweise Behältern oder Gebinden, aufweisen. Weist die mindestens eine zweite Maschine 16 eine Etikettiereinrichtung auf, ist bevorzugt, dass die mindestens eine erste Maschine 14 keine Etikettiereinrichtung aufweist.

Bei einer Verpackungsvorrichtung kann es sich z.B. um einen Schrumpfpacker oder einen Setzpacker oder eine Vorrichtung zum Herstellen von Klebegebinden handeln.

Die Vorrichtung 12A weist einen Einlaufförderer 18, einen Auslaufförderer 20, eine Pufferfläche 22 und mehrere Transferelemente 24 auf. Bevorzugt sind der Einlaufförderer 18, der Auslaufförderer 20 und/oder die Pufferfläche 22 in einer Horizontalebene ausgerichtet.

Der Einlaufförderer 18 kann stromabwärts von der mindestens einen ersten Maschine 14 angeordnet sein. Der Einlaufförderer 18 ist stromaufwärts von der Pufferfläche 22 angeordnet.

Der Einlaufförderer 18 weist einen Einlaufübergabeabschnitt 26 auf. Der Einlaufübergabeabschnitt 26 kann sich in einer ersten Förderrichtung F1 erstrecken. Der Einlaufübergabeabschnitt 26 grenzt bevorzugt an die Pufferfläche 22 an. Der Einlaufübergabeabschnitt 26 kann einspurig oder mehrspurig sein, bevorzugt jedoch einspurig. Der Einlaufübergabeabschnitt 26 bildet bevorzugt einen stromabwärtsseitigen Endbereich des Einlaufförderers 18.

Der Einlaufförderer 18 kann im Bereich vor dem Einlaufübergabeabschnitt 26 mehrspurig ausgebildet sein und bspw. Überschübe sowie Verteileinrichtungen aufweisen, die die Objekte auf optional vorhandene mehrere Spuren des Einlaufübergabeabschnitts 26 verteilen, beispielsweise reihenweise, sodass z. B. zwei oder mehr Reihen, die von einem der mehreren Transferelemente 24 zu übernehmen sind, dann kurzzeitig (solange eine Reihe noch nicht von dem Transferelement 24 abtransportiert wurde) auf dem Einlaufübergabeabschnitt 26 nebeneinander stehen können (nicht gezeigt).

Ein Überschub kann nötig sein, da bspw. ein Transportband im Einlaufübergabeabschnitt 26 zum Stehen kommen kann, wenn die Objekte durch die Transferelemente 24 erfasst werden und gleichzeitig aber im Bereich davor Objekte weitergefördert werden sollen.

Es ist möglich, dass der Einlaufförderer 18 ein bspw. einseitiges oder zweiseitiges Führungsgeländer 27 zum Führen der Objekte aufweist. Das Führungsgeländer 27 kann mit einem Beginn des Einlaufübergabeabschnitts 26 enden.

Der Auslaufförderer 20 ist stromabwärts von der Pufferfläche 22 angeordnet. Der Auslaufförderer 20 kann stromaufwärts von der mindestens einen zweiten Maschine 16 angeordnet sein. Der Auslaufförderer 20 weist einen Auslaufübergabeabschnitt 28 auf. Der Auslaufübergabeabschnitt 28 kann sich in einer zweiten Förderrichtung F2 erstrecken. Der Auslaufübergabeabschnitt 28 grenzt bevorzugt an die Pufferfläche 22 an. Der Auslaufübergabeabschnitt 28 kann einspurig oder mehrspurig sein, bevorzugt jedoch mehrspurig. Der Auslaufübergabeabschnitt 28 bildet bevorzugt einen stromaufwärtsseitigen Endbereich (Startbereich) des Auslaufförderers 20.

Handelt es sich bei der zweiten Maschine 16 bspw. um eine Verpackungsmaschine, so können auf dem Auslaufförderer 20 bspw. so viele Reihen durch ein oder mehrere Transferelemente 24 gebildet werden, wie in der Verpackungsmaschine an Zeilen oder Spalten pro Gebinde vorgesehen sind (oder ein Vielfaches). Werden in der Verpackungsmaschine beispielsweise Sixpacks mit 2 Spalten und 3 Zeilen hergestellt, so können auf dem Auslaufförderer 20 beispielsweise 3, 6 oder 9 usw. Reihen gebildet werden.

Der Einlaufförderer 18 und der Auslaufförderer 20 können bspw. als Bandförderer oder Mattenkettenförderer ausgeführt sein. Bevorzugt stützen die Förderer 18, 20 die jeweils transportierten Objekte beim Transport von unten.

Der Einlaufförderer 18 und der Auslaufförderer 20 bzw. der Einlaufübergabeabschnitt 26 und der Auslaufübergabeabschnitt 28 können in jeglicher Winkellage zueinander angeordnet sein (z. B. spitzer Winkel, rechter Winkel, stumpfer Winkel, gestreckter Winkel, überstumpfer Winkel). Beispielsweise können die Förderrichtungen F1 und F2 in einem 90°-Winkel zueinander ausgerichtet sein, wie dargestellt ist.

Es ist möglich, dass mehr als ein Einlaufförderer 18 und/oder mehr als ein Auslaufförderer 20 mit der Pufferfläche 22 verbunden ist, vorzugsweise an unterschiedlichen Winkelpositionen um die Drehachse A herum. Jeder Förderer kann einen eigenen Übergabeabschnitt zur Objektübergabe an bzw. von der Pufferfläche 22 aufweisen. Der jeweilige Übergabeabschnitt kann an die Pufferfläche 22 angrenzen.

Die Pufferfläche 22 erstreckt sich bogenförmig, vorzugsweise kreisbogenförmig, zwischen dem Einlaufübergabeabschnitt 26 und dem Auslaufübergabeabschnitt 28.

Vorzugsweise kann die Pufferfläche 22 zum Anpassen einer Bogenlänge der Pufferfläche 22 modular aufgebaut sein. Dies ermöglicht bspw., dass der Einlaufübergabeabschnitt 26 und der Auslaufübergabeabschnitt 28 in jeglicher Winkellage zueinander angeordnet werden können. Bspw. kann eine Bogenlänge eines Ringsegmentabschnitts der Pufferfläche 22 durch Ein- und Ausfahren des Ringsegmentabschnitts angepasst werden. Alternativ oder zusätzlich kann die Bogenlänge der Pufferfläche 22 bspw. durch Ändern einer Anzahl von miteinander verbundenen, benachbarten Ringsegmentabschnittmodulen der Pufferfläche 22 anpassbar sein.

Die Pufferfläche 22 kann stationär sein. Alternativ kann die Pufferfläche 22 als bewegbare Fördererfläche (z. B. Förderband mit bspw. bewegbarer Mattenkette) ausgeführt sein.

Die Pufferfläche 22 ist bevorzugt eine reine Pufferfläche. Die Pufferfläche 22 kann aber bspw. auch von einem bewegbaren FTS (fahrerloses Transportsystem) oder AGV (automated guided vehicle) gebildet sein. In dem Fall kann die Pufferfläche 22 selbst verfahren werden und beispielsweise die Objekte/Behälter, die durch die Transferelemente 24 dort abgestellt wurden, einer anderen Maschine in einer Linie zugeführt werden. Ein weiteres FTS oder AGV kann dann den Platz wieder füllen und die Funktion der Pufferfläche 22 übernehmen.

Bevorzugt finden auf der Pufferfläche 22 keine anderen Behälterbehandlungen bzw. Objektbehandlungen außer Puffern statt (also kein Abfüllen, kein Verpacken, kein Erwärmen etc.). Ein zwangsweises geringfügiges Erwärmen über die Umgebungstemperatur bei kalt abgefüllten oder ein Abkühlen von heiß abgefüllten Behältern über die Umgebungstemperatur soll keine Behandlung darstellen.

Mittels der Transferelemente 24 können die Objekte von dem Einlaufübergabeabschnitt 26 zu der Pufferfläche 22 und von der Pufferfläche 22 zu dem Auslaufübergabeabschnitt 28 bewegt werden. Eine Anzahl der mehreren Transferelemente 24 kann beliebig gewählt werden und bspw. zwei, drei, vier usw. betragen.

Die Transferelemente 24 sind um eine vertikale Drehachse A schwenkbar. Bevorzugt ist mindestens eine vertikale Drehsäule 30, 31 umfasst, die die Drehachse A aufweist. Die Transferelemente 24 können alle an der gleichen Drehsäule schwenkbar gelagert sein (nicht dargestellt). Alternativ kann bspw. für jedes Transferelement 24 eine eigene Drehsäule 30, 31 umfasst sein. Die Drehsäulen 30, 31 können koaxial zueinander und zu der Drehachse A angeordnet sein. Bspw. kann ein erstes der Transferelemente 24 an der ersten Drehsäule 30 schwenkbar gelagert sein. Ein zweites der Transferelemente 24 kann an der zweite Drehsäule 31 schwenkbar gelagert sein. Es ist möglich, dass für jedes weitere Transferelement 24 jeweils eine weitere Drehsäule umfasst ist, wie in Figur 2 bspw. durch eine gestrichelte Säule oberhalb der Drehsäule 30 angedeutet ist.

Die mindestens eine Drehsäule 30, 31 kann die Transferelemente 24 tragen. Bevorzugt sind die Transferelemente 24 nur einseitig gelagert, nämlich an der mindestens einen Drehsäule 30, 31. Die Transferelemente 24 können ausgehend von der bewegbaren Lagerung einseitig über die Pufferfläche 22 auskragen. Die Bogenform der Pufferfläche 22 kann koaxial zur Drehachse A bzw. zu der mindestens einen Drehsäule 30, 31 sein. Die mindestens eine Drehsäule 30, 31 weist bevorzugt einen (z. B. kreis-) runden Querschnitt auf.

Es ist möglich, dass mindestens eines der Transferelemente 24 vollständig umlaufend um die vertikale Drehachse A schwenkbar ist. Es ist auch möglich, dass mindestens eines der Transferelemente alternierend um die vertikale Drehachse A hin- und her schwenkbar ist. Bspw. kann alternierend zwischen dem Einlaufübergabeabschnitt 26 und der Pufferfläche 22 zum Einpuffern von Objekten hin- und hergeschwenkt werden, und/oder es kann alternierend zwischen der Pufferfläche 22 und dem Auslaufübergabeabschnitt 28 zum Auspuffern von Objekten hin- und hergeschwenkt werden, und/oder es kann alternierend zwischen dem Einlaufübergabeabschnitt 26 und dem Auslaufübergabeabschnitt 28 zum Durchlaufen von Objekten hin- und hergeschwenkt werden.

Es ist möglich, dass alle Transferelemente 24 zum Einpuffern, zum Auspuffern und zum Durchlaufen von Objekten eingesetzt werden können. In diesem Fall können die Transferelemente 24 zu dem Einlaufübergabeabschnitt 26, der Pufferfläche 22 und dem Auslaufübergabeabschnitt 28 um die vertikale Drehachse A schwenkbar sein (z. B. vollständig umlaufend um die Drehachse A oder alternierend hin- und her). Es ist auch möglich, dass bspw. mindestens eines der Transferelemente 24 zum Bewegen der Objekte nur von dem Einlaufübergabeabschnitt 26 zu der Pufferfläche 22 um die vertikale Drehachse A schwenkbar ist oder geschwenkt wird, vorzugsweise alternierend hin und her zwischen dem Einlaufübergabeabschnitt 26 und der Pufferfläche 22. Mindestens ein anderes der Transferelemente 24 kann zum Bewegen der Objekte von der Pufferfläche 22 zu dem Auslaufübergabeabschnitt 28 um die vertikale Drehachse A schwenkbar sein bzw. geschwenkt werden, vorzugsweise alternierend hin und her zwischen der Pufferfläche 22 und dem Auslaufübergabeabschnitt 28.

Die Transferelemente 24 sind zum Schwenken um die Drehachse A unabhängig voneinander antreibbar. Bspw. kann für jedes Transferelement 24 ein eigener Antrieb 32 umfasst sein. Die Antriebe 32 können an der mindestens einen Drehsäule 30, 31 angeordnet sein. Bspw. kann ein erster Antrieb 32 für ein erstes der Transferelemente 24 an der ersten Drehsäule 30 angeordnet sein. Ein zweiter Antrieb 32 für ein zweites der Transferelemente 24 kann an der zweiten Drehsäule 31 angeordnet sein. Die Antriebe 32 können bspw. als Elektromotoren ausgeführt sein.

Die Transferelemente 24 können auch höhenverstellbar bzw. vertikal bewegbar sein. Bspw. kann für jedes Transferelement 24 ein eigener Antrieb (z. B. Elektromotor) zum vertikalen Bewegen entlang der Drehachse A, also in γ-Richtung, umfasst sein (nicht gesondert dargestellt). Die vertikale Bewegbarkeit der Transferelemente 24 ist bevorzugt unabhängig voneinander. Es ist auch möglich, dass die vertikale Bewegbarkeit der Transferelemente 24 unabhängig von einer Schwenkposition des jeweiligen Transferelements 24 bezüglich der Drehachse A ist.

Es ist möglich, dass die Transferelemente 24 sich auf unterschiedlichen Höhen beim Schwenken um die Drehachse A aneinander vorbeibewegen. Bspw. kann dies durch die erläuterte Höhenverstellbarkeit der Transferelemente 24 erreicht werden. Alternativ oder zusätzlich kann dies bspw. durch eine in Vertikalrichtung (also γ-Richtung) versetzte Lagerung der Transferelemente 24 bezüglich der Drehachse A ermöglicht werden.

Die Transferelemente 24 können oberhalb des Einlaufübergabeschnitts 26, der Pufferfläche 22 und des Auslaufübergabeabschnitts 28 angeordnet sein. Je nach Schwenkposition bezüglich der Drehachse A können sich die Transferelement 24 über den Einlaufübergabeschnitt 26, die Pufferfläche 22 oder den Auslaufübergabeabschnitt 28 erstrecken.

Die Transferelemente 24 können die Objekte auf jegliche geeignete Weise bewegen. Je nach Ausführung können die Transferelemente 24 jeweils eine oder mehrere Reihen von Objekten bewegen.

Die Transferelemente 24 können Mitnehmer 34 zum Bewegen der Objekte aufweisen.

Im Ausführungsbeispiel von Figur 1 weisen die Mitnehmer 34 jeweils eine Objektgasse 48 auf. In der Objektgasse 48 kann jeweils eine Reihe von Objekten aufgenommen werden. Eine Objektgasse 48 kann durch zwei parallele Wände gebildet sein, zwischen denen die Objekte aufgenommen werden können. Es ist möglich, dass die Transferelemente 24 jeweils mehrere Objektgassen 48 zum Aufnehmen mehrerer Reihen von Objekten aufweisen. Die Objektgasse 48 kann eine feste Breite oder eine verstellbare Breite aufweisen.

Es ist auch möglich, dass die Mitnehmer 34 als Schieber ausgebildet sind. Als weitere Alternative können die Mitnehmer 34 bspw. als langestreckte, nach unten geöffnete Hauben ausgeführt sein, die die Objekte zum Bewegen aufnehmen können. Als weitere andere Alternative können die Mitnehmer 34 die Objekte zwischen sich zum Bewegen einklemmen. Es ist auch möglich, dass die Mitnehmer 34 als Greifer oder Saugvorrichtungen zum Bewegen der Objekte ausgeführt sind.

Es ist möglich, dass die Transferelemente 24 die Objekte beim Bewegen sowohl von hinten schieben als auch von vorne zum Verhindern eines Umfallens der Objekte stützen. Das Stützen von vorne kann bevorzugt zumindest oder nur beim Beschleunigen und/oder Verzögern der mehreren Objekte bewirkt werden. Bspw. kann das Schieben und Stützen durch eine gassenförmige oder greiferförmige Ausbildung der Mitnehmer 34 der mehreren Transferelemente 24 oder durch Positionieren (ggf. Klemmen) der jeweiligen Objektreihe zwischen zwei benachbarte Transferelemente 24 beim Bewegen erreicht werden.

In Ausführungsformen, in denen die Mitnehmer 34 der Transferelemente 24 die Objekte lediglich verschieben, kann die Pufferfläche 22 im FiFo-Prinzip (First-in-First-out) betrieben werden.

In Ausführungsformen, in denen die Mitnehmer 34 der Transferelemente 24 die Objekte anheben können (z. B. durch Einklemmen, Greifen oder Ansaugen sowie eine Höhenverstellbarkeit der Transferelemente 24) kann die Pufferfläche 22, wenn gewünscht, vollflexibel betrieben werden.

Jegliche gewünschte Objektreihe auf dem Einlaufübergabeabschnitt 26 oder der Pufferfläche 22 kann zu dem Auslaufübergabeabschnitt 28 bewegt werden.

Mittels einer Steuereinheit (nicht gesondert dargestellt) der Vorrichtung 12A kann die Vorrichtung 12A in unterschiedlichen Modi betrieben werden. Bspw. kann die Vorrichtung 12A in einem Einpuffermodus, einem Auspuffermodus und/oder einem Durchlaufmodus betrieben werden.

In dem Einpuffermodus können mittels der Transferelemente 24 wiederholt Objekte von dem Einlaufübergabeabschnitt 26 zu der Pufferfläche 22 bewegt werden, während keine Objekte von der Pufferfläche 22 zu dem Auslaufübergabeabschnitt 28 bewegt werden. In dem Auspuffermodus können mittels der Transferelemente 24 fortwährend mehr Objekte von der Pufferfläche 22 zu dem Auslaufübergabeabschnitt 28 bewegt werden als Objekte von dem Einlaufübergabeabschnitt 26 zu der Pufferfläche 22 bewegt werden. In dem Durchlaufmodus können mittels der Transferelemente 24 die Objekte durchgehend von dem Einlaufübergabeabschnitt 26 über die Pufferfläche 22 zu dem Auslaufübergabeabschnitt 28 bewegt werden.

Mittels der Steuereinheit können zusätzlich Formatanpassungen an unterschiedliche Objekte vorgenommen werden, beispielsweise Modifikationen eines Verfahrprofils derTransferelemente oder ein Austausch von Mitnehmern.

Für einen Austausch von Mitnehmern kann ein Magazin mit weiteren Mitnehmern entlang des Umfangs der Vorrichtung vorgesehen sein, vorzugsweise in einem Bereich, in dem keine Pufferfläche und kein Förderer ist.

Ein Austausch kann automatisch erfolgen.

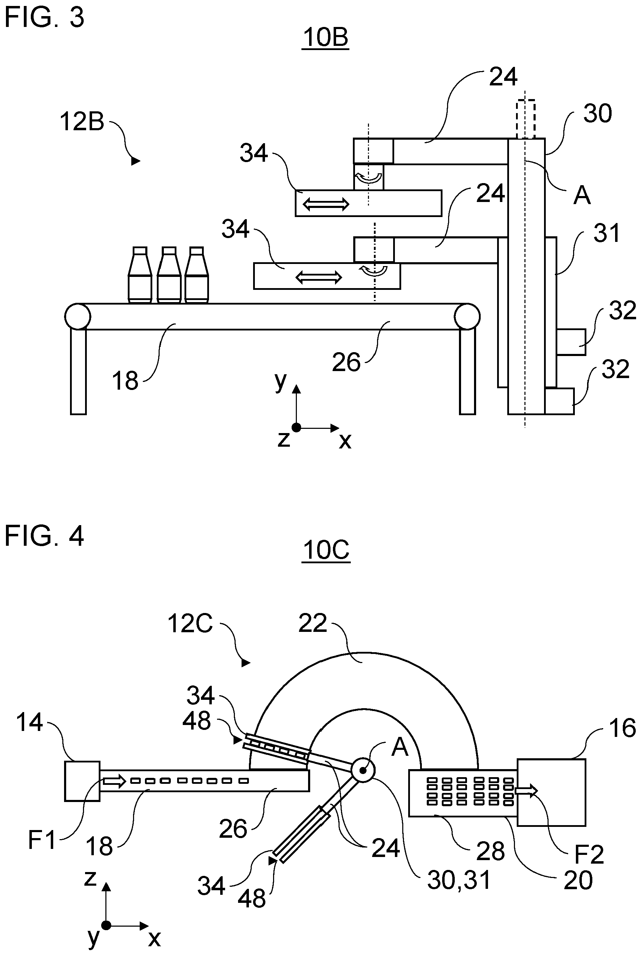

Nachfolgend sind unter Bezugnahme auf die Figuren 3 bis 10 beispielhaft modifizierte Ausführungsbeispiele beschrieben. Die modifizierten Merkmale der jeweiligen Ausführungsbeispiele sind in jeglicher Kombination miteinander kombinierbar.

Die Figur 3 zeigt eine modifizierte Vorrichtung 12B zum Puffern von Objekten. Die Mitnehmer 34 können ein- und ausfahrbar von einem Tragabschnitt der Transferelemente 24 getragen sein. Die Mitnehmer 34 können radial bezüglich der Drehachse A ein- und ausgefahren werden. Die Mitnehmer 34 können beim Einfahren die Objekte auf dem Einlaufübergabeabschnitt 26 während des Einlaufs begleiten, um die Geschwindigkeiten aneinander anzugleichen und eine sanfte Übernahme zu ermöglichen. Die Mitnehmer 34 können beim Übergeben der Objekte an den Auslaufübergabeabschnitt 28 ausfahren, um eine sanfte Übergabe an den Auslaufübergabeabschnitt 28 zu ermöglichen, sofern dieser sich bewegt.

Es ist auch möglich, dass die Mitnehmer 34 zusätzlich drehbar zum Transferelement 24 ausgebildet sind, vorzugsweise um eine Achse parallel zur Drehachse A bzw. zur Drehsäule 30, 31. Dies gilt für alle Ausführungsformen (nur in Figur 3 illustriert).

Die Figur 4 zeigt eine modifizierte Vorrichtung 12C zum Puffern von Objekten. Die Pufferfläche 22 kann sich bogenförmig um einen Winkel von rd. 180° erstrecken. Der Einlaufförderer 18 und der Auslaufförderer 20 bzw. der Einlaufübergabeabschnitt 26 und der Auslaufübergabeabschnitt 28 können in einem 180°-Winkel zueinander ausgerichtet sein bzw. gleichgerichtet sein. Die Förderrichtungen F1 und F2 können in einem 180°-Winkel zueinander ausgerichtet sein bzw. gleichgerichtet sein.

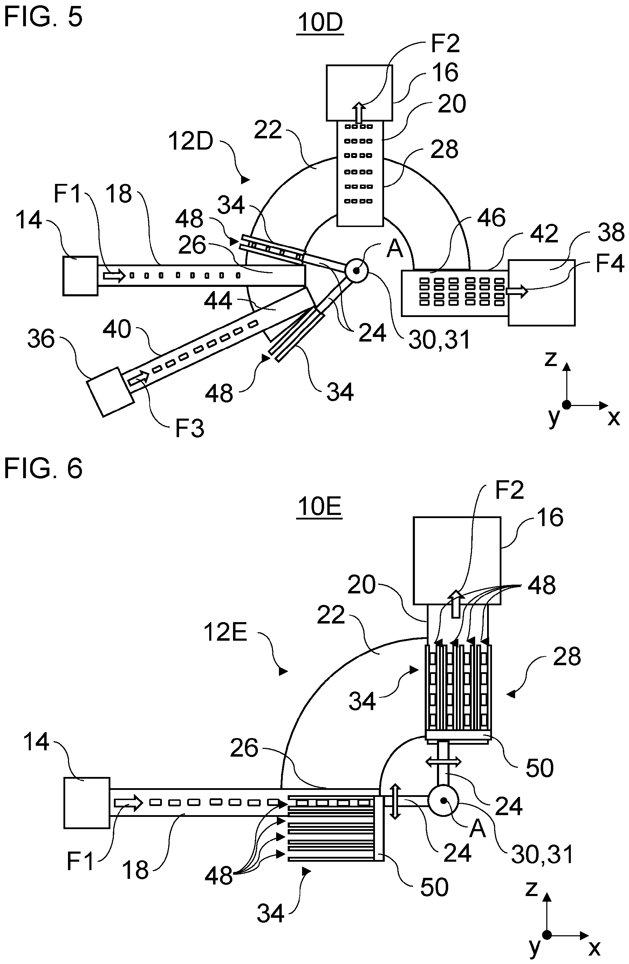

Die Figur 5 zeigt eine modifizierte Anlage 10D mit modifizierter Vorrichtung 12D.

Die Anlage 10D kann mindestens eine dritte Maschine 36 und mindestens eine vierte Maschine 38 aufweisen.

Die mindestens eine dritte Maschine 36 kann bzgl. eines Objektstroms durch die Anlage 10D stromaufwärts von der Vorrichtung 12D angeordnet sein. Die mindestens eine dritte Maschine 36 kann bspw. eine Behälterfülleinrichtung zum Befüllen von Behältern und/oder eine Behälterverschließeinrichtung zum Verschließen von Behältern und/oder eine Etikettiereinrichtung zum Etikettieren von Objekten, vorzugsweise Behältern, aufweisen.

Die mindestens eine vierte Maschine 38 kann bzgl. eines Objektstroms durch die Anlage 10D stromabwärts von der Vorrichtung 12D angeordnet sein. Die mindestens eine vierte Maschine 38 kann bspw. eine Etikettiereinrichtung zum Etikettieren von Objekten, vorzugsweise Behältern, und/oder einer Verpackungseinrichtung zum Verpacken von Objekten, vorzugsweise Behältern, und/oder eine Palettiervorrichtung zum Palettieren von Objekten, vorzugsweise Behältern oder Gebinden, aufweisen. Weist die mindestens eine vierte Maschine 38 eine Etikettiereinrichtung auf, ist bevorzugt, dass die mindestens eine dritte Maschine 36 keine Etikettiereinrichtung aufweist.

Die Vorrichtung 12D weist beispielhaft einen weiteren Einlaufförderer 40 und/oder einen weiteren Auslaufförderer 42 auf.

Der weitere Einlaufförderer 40 kann stromabwärts von der mindestens einen dritten Maschine 36 angeordnet sein. Der weitere Einlaufförderer 40 kann stromaufwärts von der Pufferfläche 22 angeordnet sein.

Der weitere Einlaufförderer 40 kann einen Einlaufübergabeabschnitt 44 aufweisen. Der Einlaufübergabeabschnitt 44 kann sich in einer dritten Förderrichtung F3 erstrecken. Der Einlaufübergabeabschnitt 44 grenzt bevorzugt an die Pufferfläche 22 an. Der Einlaufübergabeabschnitt 44 kann einspurig oder mehrspurig sein, bevorzugt jedoch einspurig. Der Einlaufübergabeabschnitt 44 bildet bevorzugt einen stromabwärtsseitigen Endbereich des weiteren Einlaufförderers 40.

Der weitere Einlaufförderer 40 kann im Bereich vor dem Einlaufübergabeabschnitt 44 mehrspurig ausgebildet sein und bspw. Überschübe sowie Verteileinrichtungen aufweisen, die die Objekte auf optional vorhandene mehrere Spuren des Einlaufübergabeabschnitts 44 verteilen, beispielsweise reihenweise, sodass z. B. zwei oder mehr Reihen, die von einem der mehreren Transferelemente 24 zu übernehmen sind, dann kurzzeitig (solange eine Reihe noch nicht von dem Transferelement 24 abtransportiert wurde) auf dem Einlaufübergabeabschnitt 44 nebeneinander stehen können (nicht gezeigt).

Der weitere Auslaufförderer 42 kann stromabwärts von der Pufferfläche 22 angeordnet sein. Der weitere Auslaufförderer 42 kann stromaufwärts von der mindestens einen vierten Maschine 38 angeordnet sein.

Der weitere Auslaufförderer 42 kann einen Auslaufübergabeabschnitt 46 aufweisen. Der Auslaufübergabeabschnitt 46 kann sich in einer vierten Förderrichtung F4 erstrecken. Der Auslaufübergabeabschnitt 46 grenzt bevorzugt an die Pufferfläche 22 an. Der Auslaufübergabeabschnitt 46 kann einspurig oder mehrspurig sein, bevorzugt jedoch mehrspurig. Der Auslaufübergabeabschnitt 46 bildet bevorzugt einen stromaufwärtsseitigen Endbereich (Startbereich) des weiteren Auslaufförderers 42.

Handelt es sich bei der vierten Maschine 38 bspw. um eine Verpackungsmaschine, so können auf dem weiteren Auslaufförderer 42 bspw. so viele Reihen durch ein oder mehrere Transferelemente 24 gebildet werden, wie in der Verpackungsmaschine an Zeilen oder Spalten pro Gebinde vorgesehen sind (oder ein Vielfaches). Werden in der Verpackungsmaschine beispielsweise Sixpacks mit 2 Spalten und 3 Zeilen hergestellt, so können auf dem weiteren Auslaufförderer 42 beispielsweise 3, 6 oder 9 usw. Reihen gebildet werden.

Der weitere Einlaufförderer 40 und/oder der weitere Auslaufförderer 42 können bspw. als Bandförderer oder Mattenkettenförderer ausgeführt sein. Bevorzugt stützen die Förderer 40, 42 die jeweils transportierten Objekte beim Transport von unten.

Der Einlaufförderer 18 und der weitere Einlaufförderer 40 bzw. der Einlaufübergabeabschnitt 26 und der Einlaufübergabeabschnitt 44 können in jeglicher Winkellage zueinander angeordnet sein (z. B. spitzer Winkel, rechter Winkel, stumpfer Winkel, gestreckter Winkel, überstumpfer Winkel). Beispielsweise können die Förderrichtungen F1 und F3 in einem spitzen Winkel zueinander ausgerichtet sein, wie dargestellt ist.

Der Auslaufförderer 20 und der weitere Auslaufförderer 42 bzw. der Auslaufübergabeabschnitt 28 und der Auslaufübergabeabschnitt 46 können in jeglicher Winkellage zueinander angeordnet sein (z. B. spitzer Winkel, rechter Winkel, stumpfer Winkel, gestreckter Winkel, überstumpfer Winkel). Beispielsweise können die Förderrichtungen F2 und F4 in einem rechten Winkel zueinander ausgerichtet sein, wie dargestellt ist.

Die Pufferfläche 22 kann sich bogenförmig, vorzugsweise kreisbogenförmig, zu dem Einlaufübergabeabschnitt 44 und/oder dem Auslaufübergabeabschnitt 46 erstrecken. Die Transferelemente 24 können zumindest teilweise zum Bewegen der Objekte von dem Einlaufübergabeabschnitt 44 zu der Pufferfläche 22 um die Drehachse A schwenkbar sein. Die Transferelemente 24 können zumindest teilweise zum Bewegen der Objekte von der Pufferfläche 22 zu dem Auslaufübergabeabschnitt 46 um die Drehachse A schwenkbar sein.

Die Figuren 6 bis 10 zeigen Ausführungsformen, bei denen die Transferelemente 24 jeweils mehrere Objektreihen bewegen können.

Die Mitnehmer 34 können jeweils mehrere Objektgassen 48 aufweisen. Die Objektgassen 48 können nebeneinander angeordnet sein. Jede Objektsgasse 48 kann eine Objektreihe aufnehmen. Bspw. können zwei, drei, vier usw. Objektgassen 48 je Mitnehmer 34 bzw. je Transferelement 24 umfasst sein.

Es ist möglich, dass der Mitnehmer 34 bspw. über einen bewegbaren Schlitten 50 des jeweiligen Transferelements 24 tangential zu einer Kreisbahn um die Drehachse A bewegbar bzw. verschiebbar ist. Der Schlitten 50 kann bspw. motorisch angetrieben sein. Es ist auch möglich, dass kein Schlitten 50 vorgesehen ist und der Einlaufübergabeabschnitt 26 bspw. mehrspurig ist.

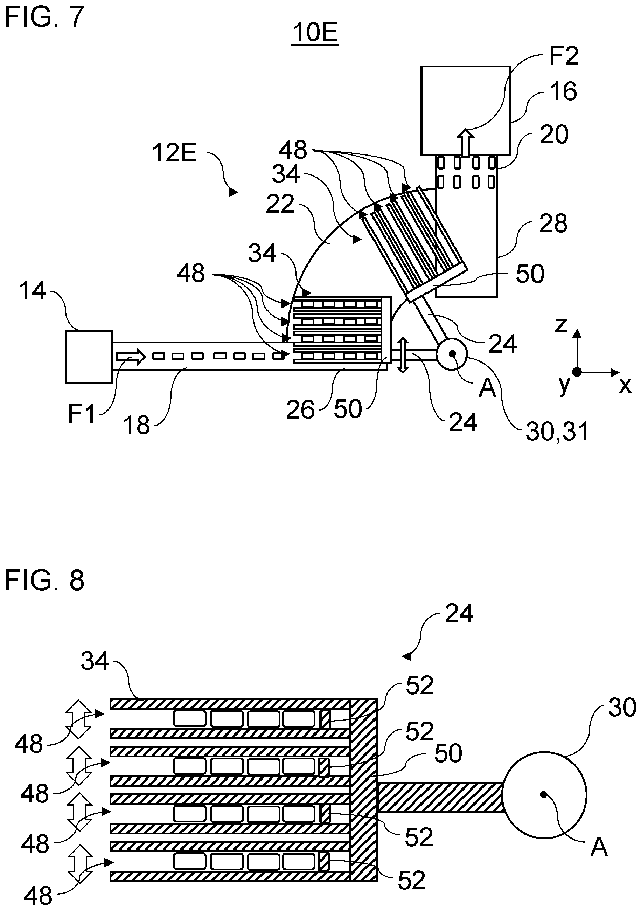

Mittels der Bewegbarkeit des Mitnehmers 34 tangential zur Kreisbahn können die Objektgassen 48 nacheinander gefüllt werden. Die zu füllenden Objektgassen 48 können nacheinander mit den Objekten auf dem einspurigen Einlaufförderer 18 ausgerichtet werden. Die Figur 6 zeigt bspw., dass eine erste Objektgasse 48 des am Einlaufübergabeabschnitt 26 positionierten Transferelements 24 gefüllt wird. In Figur 7 ist bereits die letzte (z. B. vierte) Objektgasse 48 des Transferelements 24 gefüllt. Nach dem Füllen aller Objektgassen 48 kann das jeweilige Transferelement 24 die Objektreihen gemeinsam zu der Pufferfläche 22 oder gemeinsam zu dem Auslaufübergabeschnitt 28 bewegen.

Die Figur 8 zeigt ein Ausführungsbeispiel, bei dem eine jeweilige Breite der mehreren Objektgassen 48 verstellbar ist, vorzugsweise motorisch. Die Wände einer jeweiligen Objektgasse 48 können relativ zueinander bewegt, vorzugsweise verschoben, werden. Die Wände können weg- oder kraftgesteuert bewegt werden. Die Breitenverstellung der mehreren Objektgassen 48 kann bspw. gekoppelt zueinander sein. Bspw. können die Objektgassen 48 eines Transferelements 24 somit jeweils eine im Wesentlichen gleiche Breite aufweisen.

In den Objektgassen 48 können jeweils Anschläge 52 angeordnet sein, vorzugsweise endseitig bzw. entgegengesetzt zu einem jeweiligen Einlass der Objektgassen 48. Mittels der Anschläge 52 kann bspw. erkannt werden, wenn eine Objektgasse 48 gefüllt ist. Alternativ oder zusätzlich kann mittels der Anschläge 52 bspw. eine genaue Positionierung des ersten Objekts (und ggf. der nachfolgenden, anstoßenden Objekte) in der jeweiligen Objektgasse 48 erreicht werden.

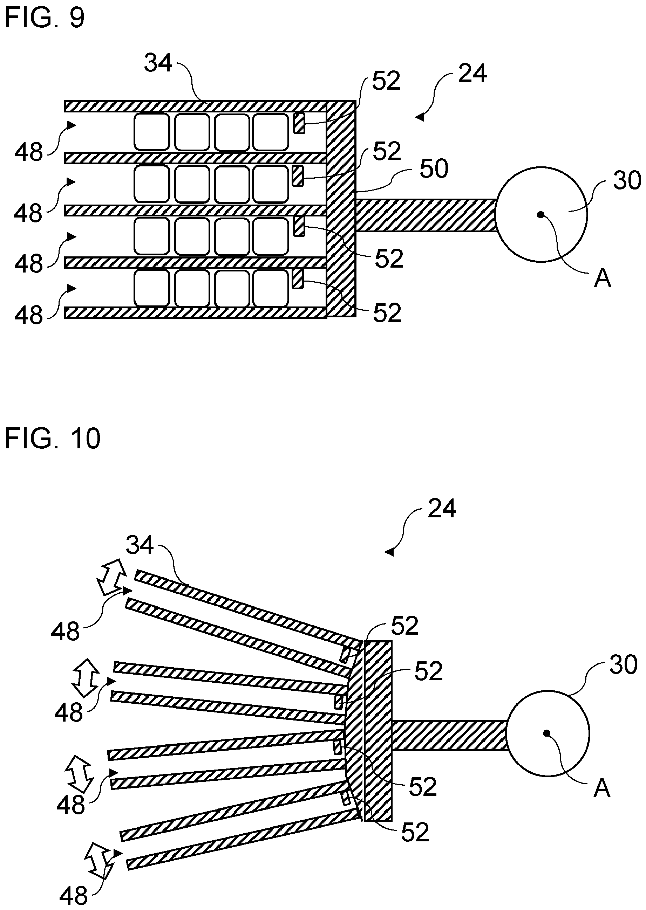

Die Figur 9 zeigt ein Ausführungsbeispiel, bei dem die mehreren Objektgassen 48 eine feststehende Breite aufweisen. Zwei benachbarte Objektgassen 48 können sich eine gemeinsame (Trenn-) Wand teilen.

In den Ausführungsbeispielen der Figuren 5 bis 9 verlaufen die Objektgassen 48 je Transferelement 24 im Wesentlichen parallel zueinander. Die Figur 10 zeigt hingegen ein Ausführungsbeispiel, bei dem die Objektgassen 48 je Transferelement angeschrägt zueinander verlaufen. Die Objektgassen 48 können in einer gespreizten Anordnung zueinander ausgerichtet sein. Beispielsweise können sich jeweilige Längsachsen der Objektgassen 48 in der Drehachse treffen bzw. radial zur Drehachse A angeordnet sein.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Einlaufförderers, des Auslaufförderers, der Pufferfläche und/oder der Transferelemente des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10A - 10F: Anlage
- 12A - 12F: Vorrichtung zum Puffern
- 14: erste Maschine
- 16: zweite Maschine
- 18: Einlaufförderer
- 20: Auslaufförderer
- 22: Pufferfläche
- 24: Transferelement
- 26: Einlaufübergabeabschnitt
- 27: Führungsgeländer
- 28: Auslaufübergabeabschnitt
- 30, 31: Drehsäule
- 32: Antrieb
- 34: Mitnehmer
- 36: dritte Maschine
- 38: vierte Maschine
- 40: weiterer Einlaufförderer
- 42: weiterer Auslaufförderer
- 44: Einlaufübergabeabschnitt
- 46: Auslaufübergabeabschnitt
- 48: Objektgasse
- 50: Schlitten
- 52: Anschlag

- A: Drehachse
- F1-F4: Förderrichtung

## Patentansprüche

1. Vorrichtung (12A-12E) zum Puffern von Objekten, vorzugsweise Behältern in einer Behälterbehandlungsanlage (10A-10E), wobei die Vorrichtung (12A-12E) aufweist:
einen Einlaufförderer (18) mit einem, vorzugsweise einspurigen, Einlaufübergabeabschnitt (26);
einen Auslaufförderer (20) mit einem, vorzugsweise mehrspurigen, Auslaufübergabeabschnitt (28);
eine Pufferfläche (22), die sich bogenförmig zwischen dem Einlaufübergabeabschnitt (26) und dem Auslaufübergabeabschnitt (28) erstreckt; und
mehrere Transferelemente (24), die unabhängig voneinander zum Schwenken um eine vertikale Drehachse (A) zum Bewegen mehrerer der Objekte von dem Einlaufübergabeabschnitt (26) zu der Pufferfläche (22) und/oder von der Pufferfläche (22) zu dem Auslaufübergabeabschnitt (28) antreibbar sind.

2. Vorrichtung (12A-12E) nach Anspruch 1, ferner aufweisend:
mindestens eine vertikale Drehsäule (30, 31), die die vertikale Drehachse (A) aufweist und an der die mehreren Transferelemente (24) schwenkbar gelagert sind,
wobei vorzugsweise mehrere koaxial angeordnete Drehsäulen (30, 31) für die mehreren Transferelemente (24) umfasst sind, besonders bevorzugt mit je einer Drehsäule (30, 31) je Transferelement (24).

3. Vorrichtung (12A-12E) nach Anspruch 1 oder Anspruch 2, wobei:
die mehreren Transferelemente (24) jeweils zu dem Einlaufübergabeabschnitt (26), der Pufferfläche (22) und dem Auslaufübergabeabschnitt (28) um die vertikale Drehachse (A) schwenkbar sind; oder
mindestens eines der mehreren Transferelemente (24) zum Bewegen der Objekte, vorzugsweise nur, von dem Einlaufübergabeabschnitt (26) zu der Pufferfläche (22) um die vertikale Drehachse (A) und zurück schwenkbar ist und/oder mindestens ein anderes der mehreren Transferelemente (24) zum Bewegen der Objekte, vorzugsweise nur, von der Pufferfläche (22) zu dem Auslaufübergabeabschnitt (28) um die vertikale Drehachse (A) und zurück schwenkbar ist.

4. Vorrichtung (12A-12E) nach einem der vorherigen Ansprüche, wobei:
die mehreren Transferelemente (24) vollständig umlaufend um die vertikale Drehachse (A) schwenkbar sind; und/oder
die mehreren Transferelemente (24), vorzugsweise nur, alternierend um die vertikale Drehachse (A) hin- und her schwenkbar sind.

5. Vorrichtung (12A-12E) nach einem der vorherigen Ansprüche, wobei die Vorrichtung (12A-12E) dazu konfiguriert ist:
in einem Einpuffermodus mittels der mehreren Transferelemente (24) wiederholt Objekte von dem Einlaufübergabeabschnitt (26) zu der Pufferfläche (22) zu bewegen und währenddessen keine Objekte von der Pufferfläche (22) zu dem Auslaufübergabeabschnitt (28) zu bewegen; und/oder
in einem Auspuffermodus mittels der mehreren Transferelemente (24) fortwährend mehr Objekte von der Pufferfläche (22) zu dem Auslaufübergabeabschnitt (28) zu bewegen als von dem Einlaufübergabeabschnitt (26) zu der Pufferfläche (22); und/oder
in einem Durchlaufmodus mittels der mehreren Transferelemente (24) die Objekte durchgehend von dem Einlaufübergabeabschnitt (26) über die Pufferfläche (22) zu dem Auslaufübergabeabschnitt (28) zu bewegen.

6. Vorrichtung (12A-12E) nach einem der vorherigen Ansprüche, wobei:
die mehreren Transferelemente (24) vertikal bewegbar sind, vorzugsweise unabhängig voneinander und/oder unabhängig von einer Schwenkposition des jeweiligen Transferelements (24) bezüglich der Drehachse (A); und/oder
die mehreren Transferelemente (24) auf unterschiedlichen Höhen beim Schwenken um die Drehachse (A) aneinander vorbeibewegbar sind.

7. Vorrichtung (12A-12E) nach einem der vorherigen Ansprüche, wobei:
die Pufferfläche (22) zum Anpassen einer Bogenlänge der Pufferfläche (22) modular aufgebaut ist, sodass vorzugsweise durch Anpassen einer Bogenlänge eines Ringsegmentabschnitts der Pufferfläche (22) und/oder durch Anpassen einer Anzahl von benachbarten Ringsegmentabschnitten der Pufferfläche (22) die Bogenlänge der Pufferfläche (22) anpassbar ist.

8. Vorrichtung (12A-12E) nach einem der vorherigen Ansprüche, wobei:
die mehreren Transferelemente (24) dazu ausgebildet sind, die jeweils mehreren Objekte in mindestens einer Reihe derart zu bewegen, dass die mehreren Objekte in der mindestens einen Reihe beim Bewegen von hinten geschoben sind und von vorne zum Verhindern eines Umfallens gestützt sind.

9. Vorrichtung (12A-12E) nach Anspruch 8, wobei das Schieben von hinten und das Stützen von vorne bewirkt ist durch:
eine gassenförmige oder greiferförmige Ausbildung von Mitnehmern (34) der mehreren Transferelemente (24); oder
Positionieren der mehreren Objekte in der mindestens einen Reihe zwischen zwei benachbarten Transferelementen (24) beim Bewegen.

10. Vorrichtung (12E) nach einem der vorherigen Ansprüche, wobei:
die mehreren Transferelemente (24) jeweils mehrere, nebeneinander angeordnete Objektgassen (48) zum gleichzeitigen Bewegen mehrerer Reihen von Objekten aufweisen.

11. Vorrichtung (12E) nach Anspruch 10, wobei:
eine jeweilige Breite der mehreren Objektgassen (48) verstellbar ist, vorzugsweise motorisch, oder die mehreren Objektgassen (48) eine feststehende Breite aufweisen; und/oder
die mehreren Objektgassen (48) je Transferelement (24) im Wesentlichen parallel verlaufen oder die mehreren Objektgassen (48) je Transferelement (24) angeschrägt zueinander verlaufen, vorzugsweise mit jeweiligen Längsachsen, die sich in der Drehachse (A) treffen.

12. Vorrichtung (12E) nach Anspruch 10 oder Anspruch 11, wobei:
die mehreren Objektgassen (48) an einem jeweiligen Transferelement (24) im Wesentlichen tangential zu einer Kreisbahn um die Drehachse (A) bewegbar sind, vorzugsweise mittels eines motorisch angetriebenen Schlittens (50) des jeweiligen Transferelements (24).

13. Vorrichtung (12A-12E) nach einem der vorherigen Ansprüche, wobei:
die mehreren Transferelemente (24) und/oder Mitnehmer (34) der mehreren Transferelemente (24) ein- und ausfahrbar sind.

14. Vorrichtung (12D) nach einem der vorherigen Ansprüche, ferner aufweisend:
einen weiteren Einlaufförderer (40) mit einem weiteren, vorzugsweise einspurigen, Einlaufübergabeabschnitt (44), wobei sich die Pufferfläche (22) bogenförmig zu dem weiteren Einlaufübergabeabschnitt (44) erstreckt, und optional mindestens eines der mehreren Transferelemente (24) zum Bewegen von Objekten von dem weiteren Einlaufübergabeabschnitt (44) zu der Pufferfläche (22) um die vertikale Drehachse (A) schwenkbar ist; und/oder
einen weiteren Auslaufförderer (42) mit einem weiteren, vorzugsweise mehrspurigen, Auslaufübergabeabschnitt (46), wobei sich die Pufferfläche (22) bogenförmig zu dem weiteren Auslaufübergabeabschnitt (46) erstreckt, und optional mindestens eines der mehreren Transferelemente (24) zum Bewegen von Objekten von der Pufferfläche (22) zu dem weiteren Auslaufübergabeabschnitt (46) um die vertikale Drehachse (A) schwenkbar ist.

15. Vorrichtung (12D) nach einem der vorherigen Ansprüche, wobei die Pufferfläche (22) modular aufgebaut ist.

16. Verfahren zum Puffern von Objekten, vorzugsweise mittels einer Vorrichtung (12A-12E) nach einem der vorherigen Ansprüche, aufweisend:
Einpuffern von Objekten von einem, vorzugsweise einspurigen, Einlaufübergabeabschnitt (26) eines Einlaufförderers (18) zu einer sich bogenförmig, vorzugsweise kreisbogenförmig, erstreckenden Pufferfläche (22) mittels mindestens eines von mehreren, unabhängig antreibbaren Transferelementen (24), das jeweils mehrere der Objekte, vorzugsweise in mindestens einer Reihe, von dem Einlaufübergabeabschnitt (26) zu der Pufferfläche (22) durch Schwenken um eine vertikale Drehachse (A) bewegt; und/oder
Auspuffern von Objekten von einer sich bogenförmig, vorzugsweise kreisbogenförmig, erstreckenden Pufferfläche (22) zu einem, vorzugsweise mehrspurigen, Auslaufübergabeabschnitt (28) eines Auslaufförderers (20) mittels mindestens eines von mehreren, unabhängig antreibbaren Transferelementen (24), das jeweils mehrere der Objekte, vorzugsweise in mindestens einer Reihe, von der Pufferfläche (22) zu dem Auslaufübergabeabschnitt (28) durch Schwenken um eine vertikale Drehachse (A) bewegt.
